Europäisches Patentamt

European Patent Office

Office européen des brevets

(11) Veröffentlichungsnummer: **0 299 916**
**A1**

## (12) EUROPÄISCHE PATENTANMELDUNG

(21) Anmeldenummer: **88810250.6**

(22) Anmeldetag: **20.04.88**

(51) Int. Cl.⁴: **H 02 J 3/18**

(30) Priorität: **24.04.87 CH 1579/87**

(43) Veröffentlichungstag der Anmeldung:
**18.01.89 Patentblatt 89/03**

(84) Benannte Vertragsstaaten:
**AT BE CH DE ES FR GB GR IT LI LU NL SE**

(71) Anmelder: **EMIL HAEFELY & CIE AG**
**Lehenmattstrasse 353**
**CH-4028 Basel (CH)**

(72) Erfinder: **Lopizzo, Gaétan G.**
**1, Place de la Gare**
**F-68300 St. Louis (FR)**

(74) Vertreter: **Gehrig, Peter et al**
**A. Braun, Braun, Héritier, Eschmann AG Holbeinstrasse**
**36-38**
**CH-4051 Basel (CH)**

Die Bezeichnung der Erfindung wurde geändert (Richtlinien für die Prüfung im EPA, A-III, 7.3).

(54) **Dämpfungsanordnung für Blindleistungskompensations- und Filterschaltungen.**

㉗ Der Saugkreisfilter besteht aus einem Grundfilterkreis (L1,T,C1) und einem Dämpfungkreis (R,C2), welcher über einen Schalterkreis (Sc) an der Sekundärseite des magnetischen Kopplers (T) angeschlossen ist. Letzterer ist Teil der Gesamtinduktivität (L1,T) des Grundfilterkreises (L1,T,C1). Das Uebersetzungsverhältnis des magnetischen Kopplers (T) ist grösser als eins gewählt, so dass die Grössen der Dämpfungselemente (R,C2) entsprechend herauftransformiert werden. Infolgedessen können kompaktere, kostengünstigere und zuverlässigere Dämpfungselemente verwendet werden.

Die Dämpfungselemente (R,C2) werden mit Hilfe des Schalterkreises (SC) gezielt dann an den Grundfilterkreis (L1,T,C1) angeschaltet, wenn es die Stabilität des Speisenetzes erforderlich macht. Sie belasten das Speisenetz also nicht ununterbrochen.

FIG. 1

EP 0 299 916 A1

**Beschreibung**

## Schaltungsanordnung

Die vorliegende Erfindung betrifft ein Saugkreisfilter gemäss Oberbegriff des Patentanspruches 1.

Ein Problem bei den Starkstromnetzen ist es, dass die Abnehmer aus dem Netz nicht reine Wirkleistung beziehen, sondern auch Blindleistung beanspruchen.

Um Starkstromnetze optimal zu nützen, sollte dieser Blindleistungsbedarf möglichst nahe beim Verbraucher mittels Kondensatorbatterien kompensiert werden. Dann nämlich ist der Speisestrom für eine gegebene Wirkleistung minimal (weil Strom und Spannung phasengleich sind).

Ein weiteres, seit jüngster Zeit immer grösser werdendes Problem ist darin zu sehen, dass immer mehr Verbraucherschaltkreise nicht lineare Schaltelemente (beispielsweise Gleichrichter, Phasenanschnittsteuerung) verwenden. Diese verhalten sich wie parallel zum Netz geschaltete Stromquellen, die bei harmonischen Frequenzen nicht zu vernachlässigende Ströme erzeugen. Diese harmonischen Ströme können zusammen mit den im Netz vorhandenen Reaktanzen sowie mit den Kondensatorbatterien zu Parallelresonanzerscheinungen führen, welche die genannten harmonischen Ströme verstärken. Diese überlagern sich der vorgesehenen Netzspeisung und führen zu Ueberspannungen. welche einzelne Komponenten im Stromnetz zerstören können.

So belasten insbesondere Stromrichter das speisende Netz mit Stromoberschwingungen. Der Netzstrom der an an das Netz angeschlossenen Stromrichter ist nämlich nicht sinusförmig. Wie die Fourier-Analyse der Stromrichter-Netzströme zeigt, weist jede Stromrichterschaltung ein bestimmtes typisches Oberschwingungsspektrum auf und wirkt somit als Oberschwingungs-Stromquelle.

Die von den harmonischen Oberwellen erzeugten Ueberspannungen können infolge von Resonanzerscheinungen beträchtliche Werte erreichen und installiertes Material, wie Kondensatorbatterien, Speise- oder Messtransformatoren, Motoren etc. beschädigen oder gar zerstören. Sie breiten sich über das gesamte Netz aus, wobei sie von Transformatoren jeweils entsprechend hinauf- oder hinabtransformiert werden.

Soll nun im Netz der Gehalt an Oberschwingungen auf ein erträgliches Mass reduziert werden, so werden als Filter wirkende L/C-Kreise in der Nähe der Stromrichter in das Netz eingeschaltet und so eingestellt, dass sie für die Oberschwingungsströme gleichsam als Kurzschlusspfade wirken. Im Idealfall fliesst dann im Netz nur die Grundschwingung in ihrer reinen Sinusform.

Solche Filter, auch als "Saugkreise" bezeichnet, werden meistens zusammen mit Kondensatorbatterien zur Blindleistungskompensation kombiniert.

Damit diese Saugkreise untereinander oder unter bestimmten Bedingungen mit der Netzimpedanz nicht zu unerwünschten Resonanzerscheinungen Anlass geben, müssen diese Saugkreise oft mittels ohmscher Widerstände gedämpft werden. Eine Saugkreisfilteranlage besteht üblicherweise aus der Serieschaltung einer Kapazität und einer Induktivität, zu der ein Dämpfungswiderstand parallel geschaltet ist.

Nachteilig bei derart bedämpften Saugkreisen ist erstens einmal, dass die Widerstände aus Komponenten aufgebaut sind, die voluminös, aufwendig in der Herstellung und somit teuer sind.

Nachteilig ist ferner, dass sie ebenfalls wirken, wenn die Oberschwingungsströme zeitweilig gering sind und damit zu unnötigen Verlusten führen. Insbesondere bewirkt der zumeist aus einem ohmschen Widerstand bestehende Dämpfungskreis eine Herabsetzung der Wirksamkeit des Saugkreises.

Das Verhalten des Speisenetzes bestimmt sich durch Spannung, Frequenz, Nominal- und Kurzschlussleistung. Alle diese Parameter sind nicht als konstant anzunehmen. Je nach Art des Netzes und dessen Betriebszustand, kann ein oder können mehrere Parameter variieren. Aus diesem Grund ist es nicht möglich, ein für alle Bedingungen optimales Filter zu dimensionieren. Es muss ein Kompromiss zwischen Wirksamkeit und Funktionssicherheit gefunden werden. Ein Filter mit einer geringen Bandbreite kann im Falle einer auch nur leichten Verstimmung die Funktionssicherheit beeinträchtigen. Das Hinzufügen eines Widerstandes in den Filterkreis bewirkt eine Verbreiterung der nutzbaren Bandbreite des Filters, was jedoch zu beträchtlichen Leistungsverlusten schon bei der Nenn-Netzfrequenz von 50 Hz oder 60 Hz führen kann.

Die Erfindung, wie sie in den Patentansprüchen gekennzeichnet ist, löst die Aufgabe, einen Saugkreis zu schaffen, welcher in platzsparender Weise, mit geringstmöglichem Aufwand und somit kostengünstig hergestellt werden kann, und während des Betriebes geringstmöglichste Wirkungsleistungsverluste erzeugt.

Durch eine magnetische Kopplung des Dämpfungskreises an den Grundfilterkreis mit einem magnetischen Koppler, der ein Uebersetzungsverhältnis grösser als eins aufweist, können Dämpfungselemente mit kleineren Grössen verwendet werden, die für niedrigere Spannungen ausgelegt sind. Infolgedessen können nicht nur kompaktere Bauelemente verwendet werden, die eine raumsparende Bauweise erlauben und kostengünstiger sind, sondern solche, die sich darüber hinaus noch durch eine grössere Zuverlässigkeit auszeichnen.

In einer weiteren Ausgestaltung der Erfindung können sowohl Grundfilterkreis als auch Dämpfungselement über einen Schalterkreis zuschaltbar vorgesehen sein. Somit können der Saugkreis und/oder der Dämpfungskreis gezielt dann zugeschaltet werden, wenn die Stabilität des Netzes es erforderlich macht. Auf diese Weise können die Verluste des Speisenetzes über die gesamte Betriebsdauer gesehen reduziert werden.

In einer vorteilhaften Ausführungsvariante enthält der Dämpfungskreis einen Sperrkreis, dessen Sperrfrequenz der Frequenz des Speisenetzes entspricht. Mit einem solchen Sperrkreis kann die Belastung des Speisenetzes zusätzlich reduziert werden.

Nachstehend wird die Erfindung anhand einer Zeichnung beispielsweise näher erläutert. Es zeigen:

Fig. 1 eine prinzipielle Darstellung einer ersten Ausführungsvariante der Erfindung,

Fig. 2 eine prinzipielle Darstellung einer zweiten Ausfüh rungsvariante der Erfindung und

Fig. 3 ein Blockschaltbild einer Steuerschaltung ST.

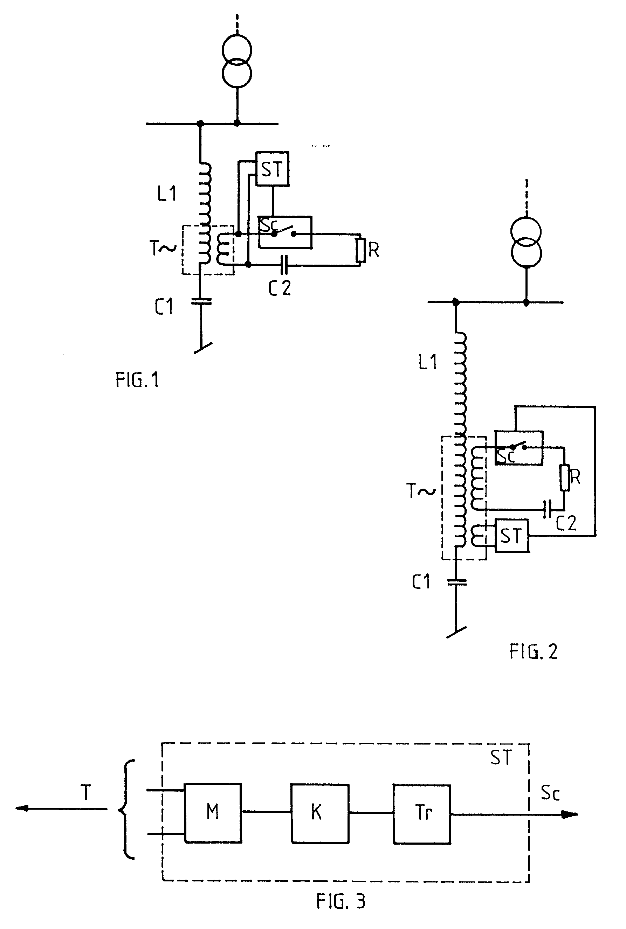

In Figur 1 ist in prinzipieller Weise eine erste Ausführungsvariante der Erfindung dargestellt. Eine Induktivität L1 ist mit der Primärwirkung eines magnetischen Kopplers T und einer Kapazität C1 in Serie geschaltet. Am Sekundärkreis des Kopplers T ist über einen Schalterkreis Sc ein ohmscher Widerstand R und eine zweite Kapazität C2 angeschlossen. Der Schalterkreis So wird von einem Steuerkreis ST gesteuert, der direkt mit der Sekundärwicklung des Kopplers T verbunden ist.

Die Induktivität L1, der Koppler T und die erste Kapazität C1 wirken als Grundfilterkreis und sind ständig am Speisenetz angeschlossen. Der ohmsche Widerstand R und die zweite Kapazität C2 wirken als Dämpfungskreis und werden nur im Bedarfsfalle zugeschaltet.

Die Primärwicklung des Kopplers T weist mehr Windungen auf als die Sekundärwicklung, so dass das Uebersetzungsverhältnis des Kopplers grösser als eins ist. Durch die Massnahme, dass die Dämpfungselement R,C2 sekundärseitig an einem solchen Koppler angeschlossen sind, werden ihre Werte von der Primärseite her gesehen entsprechend dem Uebersetzungsverhältnis modifiziert. Es können also eine Kapazität C2 und ein ohm scher Widerstand für wesentlich geringere Betriebsspannungen und somit kostengünstigere Baukomponenten eingesetzt werden, die weniger aufwendig in der Herstellung sind und sich zudem durch eine wesentlich kompaktere Bauweise auszeichnen. Der durch den Einsatz zusätzlicher Bauelemente bedingte Aufwand wird dadurch mehr als ausgeglichen.

Bei geöffnetem Schalterkreis Sc ist der Saugkreis bei hoher Güte auf einen engen Frequenzbereich eingestellt. Sobald der Schalterkreis Sc geschlossen ist, sind die Dämpfungselemente R,C2 zugeschaltet und der Saugkreis ist bei geringerer Güte auf einen breiteren Frequenzbereich eingestellt.

Figur 2 zeigt eine Ausführungsvariante, bei welcher der Steuerkreis ST mittels einer dritten Wicklung an den Koppler T angeschlossen ist. Damit wird das Eingangssignal an die Eingangsstufe des Steuerkreises ST weniger von der Stellung des Schalterkreises Sc abhängig. Auch ist es durchaus möglich, den Steuerkreis ST von einer anderen Stelle aus (z.B. von einer Netzleitstelle oder auch von einem Verbraucher aus) mittels anderer Uebertragungstechniken (Tonfrequenz, HF-Trägerfrequenz, Lichtleiter, Infrarot etc.) anzusteuern.

Die Betätigung des Schalterkreises Sc erfolgt durch den Steuerkreis ST. Dieser ist an seinem Eingang mit dem Sekundär- oder Tertiärkreis des Kopplers T verbunden. Die Ein gangsstufe der Steuerschaltung ST besteht gemäss Figur 3 aus einem Spannungsmesser M. Sobald ein vorgegebener Wert erreicht ist, gibt ein Komparator K ein Signal an eine Treiberstufe Tr ab, welches einen an den Schalterkreis Sc gerichteten Schaltimpuls auslöst.

Für den Fachmann ergeben sich nun eine Fülle von Variationsmöglichkeiten. Ein Saugkreis kann aus einer Vielzahl von Grundfilterkreisen mit oder ohne Dämpfungskreisen aufgebaut sein. Hierbei können einzelne oder auch alle Grundfilterkreise dem Speisenetz oder Verbraucheranschluss zuschaltbar sein. Darüber hinaus können mit oder ohne magnetische Kopplung Dämpfungselemente vorgesehen sein, die mit dem Grundfilterkreis fest verbunden oder diesem zuschaltbar sind.

Auf der anderen Seite kann es genügen, wenn ein Saugkreis aus einem einzigen Grundfilterkreis mit einem über eine magnetische Kopplung ständig verbundenen Dämpfungskreis aufgebaut ist.

Bei einer anderen stark vereinfachten Ausführungsvariante kann auf die magnetische Kopplung verzichtet werden und Grundfilterkreis und/oder Dämpfungskreis über einen Schalterkreis mit dem Speisenetz bzw. dem Grundfilterkreis verbunden sein.

Zum Schluss sei darauf hingewiesen, dass die obenstehenden Ausführungen das Grundprinzip der Erfindung in stark vereinfachter Form für stationäre Zustände wiedergeben. Für transiente Vorgänge (Kurzschluss der Kondensatorbatterie oder Einschaltvorgänge) sind spezielle an dieser Stelle nicht dargestellte Vorsichtsmassnahmen erforderlich, die jedoch jedem Fachmann vertraut sind.

**Patentansprüche**

1. Saugkreisfilter für ein mit Starkstrom betriebenes Speisenetz mit mindestens einem aus wenigstens einer Induktivität und wenigstens einer Kapazität bestehenden Grundfilterkreis und einem aus wenigstens einem ohmschen Widerstand bestehenden Dämpfungskreis, dadurch gekennzeichnet, dass der Dämpfungskreis (R,C2) über einen magnetischen Koppler (T) am Grundfilterkreis (L1,T,C1) angeschlossen ist, wobei die Primärseite des magnetischen Kopplers (T) Teil der Gesamtinduktivität (L1,T) des Grundfilterkreises (L1,T,C1) ist, dass das Dämpfungselement (R,C2) an der Sekundärseite des magnetischen Kopplers (T) angeschlossen ist, und dass der magnetische Koppler (T) von der Primär- zur Sekundärseite ein Uebersetzungsverhältnis grösser als eins aufweist.

2. Saugkreisfilter für ein mit Starkstrom betriebenes Speisenetz mit mindestens einem aus wenigstens einer Induktivität und wenigstens einer Kapazität bestehenden Grundfilterkreis und mindestens einem aus wenigstens einem ohmschen Widerstand bestehenden Dämpfungskreis, dadurch gekennzeichnet, dass der Grundfilterkreis (L1,T,C1) und/oder der Dämpfungskreis (R,C2) über einen Schalterkreis (Sc) an das Speisenetz bzw. den Grundfilterkreis (L1,T,C1) zuschaltbar ist bzw. sind.

3. Saugkreisfilter nach Anspruch 1, dadurch gekennzeichnet, dass der Grundfilterkreis (L1,T,C1) und/oder der Dämpfungskreis (R,C2) über einen Schalterkreis (Sc) an das Speisenetz bzw. den Grundfilterkreis (L1,T,C1) zuschaltbar ist bzw. sind.

4. Saugkreisfilter nach einem der Ansprüche 1 bis 3, dadurch gekennzeichnet, dass der Dämpfungskreis (R,C2) nebst dem ohmschen Widerstand (R) eine in Serie dazu geschaltete Kapazität (C2) aufweist.

5. Saugkreisfilter nach einem der Ansprüche 1 bis 4, dadurch gekennzeichnet, dass der Dämpfungskreis (R,C2) eine verstellbare Drossel (Dr) mit einem oder mehreren Abgriff(en) (A) für die Feineinstellung der Verstimmung des Saugkreisfilters aufweist.

6. Saugkreisfilter nach einem der Ansprüche 1 bis 5, dadurch gekennzeichnet, dass der Dämpfungskreis (R,C2) einen Sperrkreis aufweist, dessen Sperrfrequenz der Frequenz des Speisenetzes entspricht.

7. Saugkreis nach einem der Ansprüche 2 bis 6, dadurch gekennzeichnet, dass der Schalterkreis (Sc) durch einen am Speisenetz direkt oder über einen magnetischen Koppler (T) angeschlossenen Steuerkreis (ST) betätigbar ist, welcher mit einem Spannungsmesser (M) und einem Komparator (K) versehen ist, derart, dass der Dämpfungskreis (R,C2) dann zugeschaltet wird, wenn eine vorgegebene Spannung im Speisenetz überschritten wird.

8. Saugkreisfilter nach Anspruch 7, dadurch gekennzeichnet, dass der magnetische Koppler (T) für den Steuerkreis (ST). mit demjenigen für den Dämpfungskreis (R,C2) identisch ist.

9. Saugkreisfilter nach einem der Ansprüche 2 bis 8, mit mehreren auf je eine vorgegebene Frequenz abgestimmten Grundfilterkreisen, dadurch gekennzeichnet, dass mindestens einer der Steuerkreise (ST) einen Spannungsmesser (M) und einen Kompa rator (K) aufweisen, die derart eingestellt sind, dass der entsprechende Grundfilterkreis (L1,T,C1) und/oder der zugehörige Dämpfungskreis (R,C2) selektiv dann zugeschaltet wird, wenn die Spannungskomponente bei der dem entsprechenden Grundfilterkreis (L1,T,C1) zugeordneten Frequenz eine vorgegebene Höhe überschreitet.

10. Saugkreis nach einem der Ansprüche 3 bis 9, dadurch gekennzeichnet, dass wenigstens ein Schalterkreis (Sc) fernsteuerbar ist.

0299916

FIG.1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WO-A-8 100 648 (ASSOCIATED ELECTRICAL INDUSTRIES LTD) <br> * Seite 5, Zeilen 4-26; Figuren 1-3 * <br> --- | 1,4 | H 02 J 3/18 |
| A | GB-A- 388 954 (INTERNATIONAL GENERAL ELECTRIC CO.) <br> * Seite 1, Zeilen 71-78; Figur 2 * <br> --- | 1 | |
| A | IEE PROCEEDINGS, "section" A-I, Band 133, Nr. 4, Teil B, Juli 1986, Seiten 263-269, Stevenage, Herts, GB; R. YACAMINI et al.: "Thyristor controlled reactors as harmonic sources in HVDC convertor stations and AC systems" <br> * Seite 266, Abschnitt 5; Figur 7 * <br> ----- | 1 | |

RECHERCHIERTE
SACHGEBIETE (Int. Cl.4)

H 02 J
G 05 F

Der vorliegende Recherchenbericht wurde für alle Patentansprüche erstellt

| Recherchenort | Abschlußdatum der Recherche | Prüfer |
|---|---|---|
| DEN HAAG | 15-07-1988 | GOETZ P.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)